# EUROPEAN PATENT SPECIFICATION

(11) **EP 2 238 735 B1**
(45) Date of publication and mention of the grant of the patent: **17.08.2011**
(21) Application number: 08774354.8
(22) Date of filing: 26.06.2008
(51) Int. Cl.: H04L 29/12

(54) **METHOD AND APPARATUS FOR ALLOCATION OF PARAMETER VALUES IN A COMMUNICATIONS SYSTEM**
VERFAHREN UND VORRICHTUNG ZUM ZUTEILEN VON PARAMETERWERTEN IN EINEM KOMMUNIKATIONSSYSTEM
PROCÉDÉ ET DISPOSITIF D'ATTRIBUTION DE VALEURS DE PARAMÈTRE DANS UN SYSTÈME DE COMMUNICATION

(30) Priority: 31.01.2008 US 25021 P
(43) Date of publication of application: 13.10.2010
(73) Proprietor: Telefonaktiebolaget L M Ericsson (publ), 164 83 Stockholm (SE)
(72) Inventor: LEVKOWETZ, Henrik, S-113 37 Stockholm (SE)
(74) Representative: Sjöberg, Mats Hakan
(86) International application number: PCT/EP2008/058177
(87) International publication number: WO 2009/095088

(56) References cited:
- WO-A-2007/130416
- WO-A-2008/011542
- US-A1- 2007 147 299

## Description

### Technical field

The present invention relates to the allocation of a value to a client host of a parameter in the Dynamic Host Configuration Protocol, such as a value of an Internet Protocol address.

### Background

The Dynamic Host Configuration Protocol (DHCP), defined inter alia in the Internet Engineering Task Force (IETF) specification RFC 2131 *"Dynamic Host Configuration Protocol",* is often used for providing configuration parameters to nodes communicating via the Internet Protocol, such nodes often referred to as "hosts". The DHCP is a protocol for delivering host-specific configuration parameters from a DHCP server to a client host and for allocation of network addresses to client hosts. The allocation of a network address when performed by a DHCP server can be "automatic", in which a permanent IP address is allocated to a client host; or "dynamic", in which an IP address is assigned to a client host for a limited period of time.

When the dynamic allocation mechanism is used, a client host can receive different IP addresses at different points in time. However, there is generally a desire to allow for the repeated assignment of the same IP address to a client host. In particular, it is strongly desirable that the same IP address is used by the client host throughout the entire duration of a communications session, in order for IP packets intended for the client host to reach the client host.

Patent application WO2007/130416 describes the sending of a DHCP request including a title object to an access point for obtaining preferred parameters.

According to the current DHCP specification RFC 2131, a client host can include, in a request for an IP address sent to a DHCP server, a client hardware address or a client identifier. The purpose of both the client hardware address and the client identifier is to identify the client host (the client identifier option has been introduced into the standard in order to eliminate overloading of the client hardware address data field). The client identifier could be the client hardware address, or a Domain Name System (DNS) name (see RFC 2131, section 2).

Hence, if a DHCP server, which has previously allocated an 1P address to a client host making a request for an 1P address, has stored information on which IP address was previously assigned to the client host, the DHCP server can use the client hardware address or the client identifier to identify the requesting client host, and assign to the requesting client host, in response to the request for an IP address, the same IP address as was previously used by this client host.

The above described procedure for facilitating the repeated allocation of the same IP address to a client host is effective when the client host requests an IP address from the DHCP server which had previously assigned the desired IP address to the client host. However, in some cases, the client host may be in communication with two or more DHCP servers sequentially, such as for example if a mobile client host moves through a communications network and repeatedly requests an IP address from new DHCP servers.

Patent application WO 2008/011542 discloses a mobile station that requests continued use of its IP adress after roaming.

In order to allow for the subsequent allocation of the same IP address and other parameter values to a client host from different DHCP servers, synchronisation of DHCP servers has been discussed, see e.g. *"*An Inter-server Protocol for DHCP" by K. Kinnear, R. Cole and Droms. At present, this document is available at http://tools.ietf.org/html/draft-ietf-dhc-interserver-02.txt. However, there is today no standard that specifies synchronisation of DHCP servers, and vendor specific solutions are restricted in that only DHCP servers from the same vendor will be synchronised. Furthermore, the synchronisation of DHCP servers requires extensive signalling and processing power that could better be used for the transmission of traffic data - and the amount of signalling required to achieve synchronisation in an area increases dramatically when the number of DHCP servers increases.

Hence, there is a desire to provide a way of enabling a DHCP server to allocate, to a client host that requests a value of a parameter such as the IP address, the same parameter value that was previously allocated to the requesting client host from a different DHCP server, without a requirement of synchronisation of DHCP servers.

### Summary

An object of the present invention is to provide a way of enabling an access point to allocate, to a client host, the same value of a parameter as was previously allocated to the client host by a different access point, without a requirement of synchronisation of DHCP servers.

This object is achieved by a method according to claim 1 for allocating a value of a parameter to a client host by an access point in a communications system comprising an IP network. According to the method, a DHCP message is used to carry a signed information package from a first parameter-value-assigning node to the access point via the client host, wherein the signed information package comprises information on a preferred value of the parameter and a signature of the first parameter-value-assigning node.

In one aspect of the invention where the method is implemented in an access point, the DHCP message including the signed information package is received in the access point. The access point then verifies the signature of the first parameter value allocating node, and allocates the preferred parameter value to the client host if the verification of the signature so indicates and the preferred parameter value is available for allocation.

In another aspect of the invention where the method is implemented in a client host, the client host receives the signed information package from the first parameter-value assigning node, and stores the signed information package. The signed information package can then be sent in the DHCP message to the access point, generally at a later point in time.

The object of the invention is also achieved by a client host according to claim 9 capable of communicating with an access point by means of the DHCP protocol in order to receive a value of a parameter. The inventive client host comprises an interface arranged to receive, from a first parameter-value-assigning node, a signed information package including information on a preferred value of the parameter and a signature of the first parameter-value-assigning node. The client host further comprises a memory arranged to store the signed information package in the client host; and a DHCP client application (1010) adapted to include the signed information package in a DHCP message, and send said DHCP message to the access point acting as a DHCP server.

The object of the invention is furthermore achieved by an access point according to claim 13 capable of communicating with a client host by means of the DHCP protocol in order to assign a value of a parameter to the client host. The inventive access point comprises an interface arranged to receive a DHCP message from the client host, where the DHCP message comprises a signed information package including information on a preferred value of the parameter and a signature of a first parameter-value-assigning node. The interface is also adapted to retrieve, from the received DHCP message, the preferred value of the parameter and the signature. The access point further comprises a verification mechanism connected to the interface, arranged to verify said signature and to generate a verification signal in response to said verification. The access point further comprises a DHCP server arranged to allocate, to the client host, a parameter value in dependence of the verification signal in a manner so that the value allocated to the client host will be the preferred value if the verification mechanism determines that the signature is true and the preferred value is available for allocation.

By the invention is achieved that an access point may obtain reliable information regarding which value of a parameter that has been assigned to a client host at a previous point, without the requirement of synchronisation of access points in this regard. As a consequence, the client host can keep a certain value of a parameter even if the access point by which the client host is connected to a network changes, thus achieving a more stable operation of the client host.

The signed information package may advantageously be transmitted in the vendor specific option, as defined in the DHCP standard, of a DHCP message sent from a client host to an access point, or from the access point to the client host. In a DHCP message transmitted from a client host to an access point, the signed information package may alternatively advantageously be transmitted in the client identifier option of a DHCP message. By transmitting the signed information package in the client-identifier option or the vendor specific option of a DHCP message, it is achieved that the signed information package can be formatted as desired, since the client-identifier option and the vendor specific option can carry information of arbitrary length (up to a maximum length). By transmitting the signed information package in the client identifier option of a DHCP message is achieved that an access point that receives the DHCP message and does not have any functionality for handling the signed information package will simply regard the signed information package as an unknown client identifier and will treat the DHCP message in a conventional manner.

The object is further achieved by computer program products as defined in the claims 17 and 18.

### Abbreviations

- AP: Access Point
- DHCP: Dynamic Host Configuration Protocol
- DNS: Domain Name Server
- IETF: Internet Engineering Task Force
- IP: Internet Protocol
- MIP HA: Mobile IP Home Agent
- NAT: Network Address Translator
- NIS: Network Information Service
- NIS+: Network Information Service "plus"
- OpenSSL: Open source Secure Sockets Layer
- POP: Postal Office Protocol
- SIGN-ADDR: Signed information package comprising IP address
- SIGN-INFO: Signed information package

### Brief description of the drawings

For a more complete understanding of the present invention, and the advantages thereof, reference is now made to the following descriptions taken in conjunction with the accompanying drawings, in which:
Fig. 1 is a schematic overview of a communications system in which the invention may advantageously be implemented.
Fig. 2 is an example of a signed information package.
Fig. 3 is an example of a DHCP message including a signed information package.
Fig. 4 is a signalling diagram illustrating a parameter value request.
Fig. 5 is a signalling diagram illustrating a parameter value request wherein the requested parameter value is an IP-address.
Fig. 6 is a signalling diagram illustrating a scenario in which a signed information package is issued to a client host by an access point.
Fig. 7 is a signalling diagram illustrating a scenario wherein a request to extend a lease of a parameter value is transmitted from an access point via which a client host is currently communicating to an access point having issued a signed information package.
Fig. 8 is a flow chart schematically illustrating access point functionality.
Fig. 9 is a flow chart schematically illustrating client host functionality.
Fig. 10 is a schematic illustration of a client host.
Fig. 11 is a schematic illustration of an access point.

### Detailed description

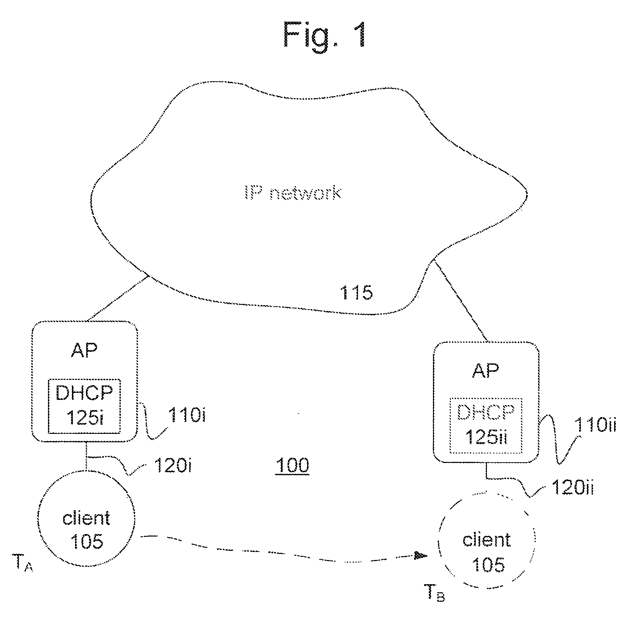

A communications system 100 wherein communication via the Internet Protocol can occur between different nodes is schematically illustrated in Fig. 1. A system 100 typically comprises plurality of Access Points 110, as well as a plurality of client hosts 105, as well as a large number of client hosts 105 capable of communicating within the system 100 via an Access Point (AP) 110. In Fig. 1, one client host 105 as well as two Access Points (APs) 110i and 1 10ii are shown. The Access Points 110i and 110ii of Fig. 1 are connected to an Internet Protocol (IP) network 115, and provide access to the IP network 115 to client hosts 105. Communication between client hosts 105 and Access Points 110 can occur over a connection 120. The Access Points 110 comprise a Dynamic Host Configuration Protocol (DHCP) server 125, and hence, the connection 120 can for example be used for communication by means of the Dynamic Host Configuration Protocol, further specified in IETF RFC 2131. The connection 120 could be a wired connection, or a wireless connection such as a radio connection.

In Fig. 1, the client host 105 is shown to communicate via AP 110i at a point in time T_{A}. However, as is indicated in the figure by dashed lines, the client host 105 in Fig. 1 subsequently changes its point of access to the IP network 115 and communicates, at a later point in time T_{B}, via AP I 10ii. A change in the point of access to the IP network 115 could for example be triggered by the client host 105 changing its physical location.

As described above, in many situations, it would be desirable for a client host 105 to be able to use the same IP address, and/or the same value of other parameters, when accessing the IP network 115 via AP 110ii as when previously accessing the IP network 115 via AP 110i. This can for example be the case if the client host is involved in an ongoing communications session when the transfer from AP 110i to AP 110ii is performed.

According to the invention, the subsequent allocation of the same parameter value to a client host 105 from two or more different APs 110 can be achieved by introducing a signed information package that can be transmitted over the DHCP protocol between a client host 105 and an AP 110, where the signed information package comprises information on a preferred parameter value as well as a verifiable signature of a node that has generated the signed information package, hereinafter referred to as the first parameter-value assigning node. The first parameter-value assigning node could typically be another AP 110, but could also be for example a network administrating node responsible for allocating parameter values such as IP-addresses to client hosts 105. The preferred value of the parameter corresponds to the value of the parameter assigned to the client host by the first parameter-value assigning node. The parameter to which a value should be assigned could for example be an IP address, a Domain Name Server identity, an e-mail server identity, etc.

Hence, by applying the invention, the client host 105 can carry verifiable information regarding parameter values assigned to the client host by a first parameter-value assigning node to an access point 110 via which the client host 105 is currently accessing the IP network 115. Thereby, the need for synchronisation of access nodes in system 100 in this context is removed. The verifiability of such information is important in order to diminish the risks of fraud in system 100 - for example, if no signature of a request for an IP address is required, communication sessions could be hi-jacked by client hosts 105 pretending to be the client host 105 that originally was part of the communications session.

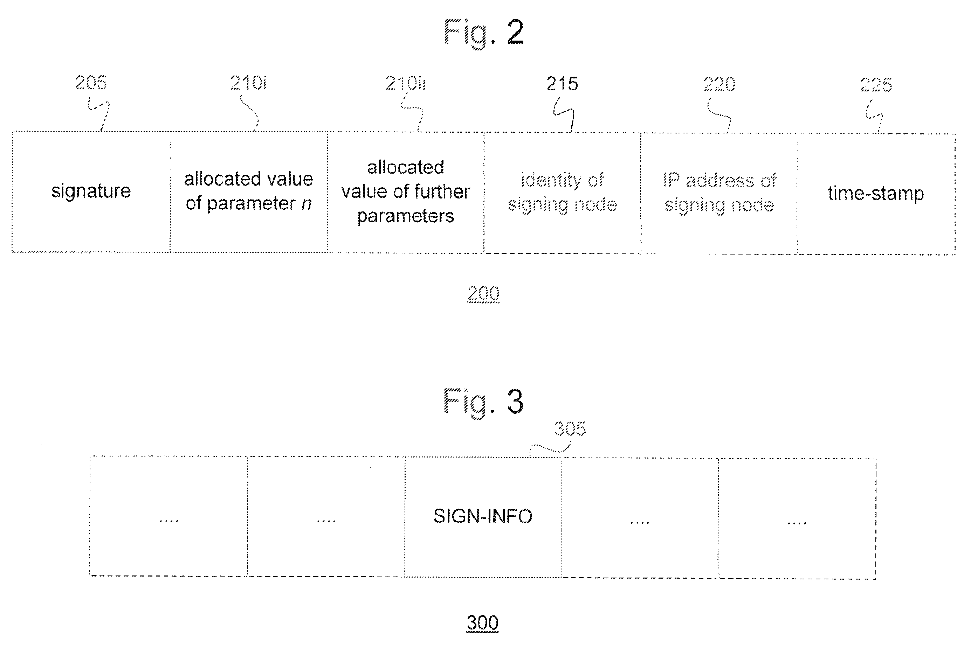

An example of a signed information package 200 is schematically illustrated in **Fig. 2**. The signed information package 200 of Fig. 2 comprises a signature field 205 which carries the signature of the first parameter-value assigning node, wherein the signature is generated over the data fields of the information package 200 which should be protected by the signature, which could typically be all the data fields of the information package 200 except for the signature field 205 itself. The signed information package could be seen as a so called cookie.

Signed information package 200 also comprises information on parameter values in at least one parameter value field 210. If signed information package 200 comprises information on more than one parameter value, it can comprise more than one parameter value field 210 - the signed information package 200 of Fig. 2 is shown to include three parameter value fields 210i and 210ii.Signed information package 200 could comprise further data fields, such as a first parameter-value assigning node identity field 215 comprising information on the identity of the first parameter-value assigning node, a first parameter-value assigning node address field 220 comprising information on the IP address of the first parameter-value assigning node, a time stamp field 225 comprising information on when the assignment of the parameter value(s) to the client host 105 expires. Other data fields may also be conceived, such as a certificate authority data field comprising information on the certificate authority that has issued the certificate used to sign the signed information package 200.

The signed information package 200 could advantageously be transmitted in an already existing DHCP message 300. **Fig. 3** illustrates a DHCP message wherein a signed information package, SIGN-INFO, has been included in a data field 305. For transmission of the signed information package 200 from the client host 105 to the AP 110, suitable DHCP messages would be the DHCPDISCOVER, DHCPREQUEST and DHCPINFORM. DHCPDECLINE and DHCPRELEASE could also be used.

The data field 305 in which the signed information package 200 is included could advantageously be the client-identifier option (option 61), or the vendor-specific option (option 43). The conventional use of the client identifier option in a DHCP message is to convey static information that does not carry any other significance than to serve as a static identifier of the transmitting client host 105. However, the client-identifier option and the vendor-specific option allow for transmission of an identifier of arbitrary length (up to a maximum length). To include the signed information package 200 in one of these options thus allows for the signed information package to be of any suitable formatting.

A further advantage of using the client identifier option or the vendor specific option for the transmission of the signed information package 200 is that an AP 110 that does not have the necessary functionality for retrieving information from a signed information package 200 in a received DHCP message 300 will ignore the signed information package 200 as incomprehensible binary information, and simply treat the received DHCP message 300 in a conventional manner. Moreover, as long as a client host 105 does not receive a new signed information package 200 which supersedes the previous one, the content of the client identifier field 205 would effectively be static, and could thus additionally serve as a traditional client identifier.

For transmission of the signed information package 200 from an AP 110, acting as a first parameter-value assigning node, to a client host 105, suitable DHCP messages would be DHCPOFFER and DHCPACK. DHCPNACK could also be used. The vendor-specific option (option 43), available in DHCPOFFER, DHCPACK, as well as in DHCPNACK, could advantageously be used for this purpose. The vendor-specific option can carry information of arbitrary length (up to a maximum length). Furthermore, a client host 105 that does not have the necessary functionality for handling a signed information package 200 would, if the signed information package 200 is transmitted in the vendor-specific option, ignore the signed information package and treat the DHCP message in a conventional manner

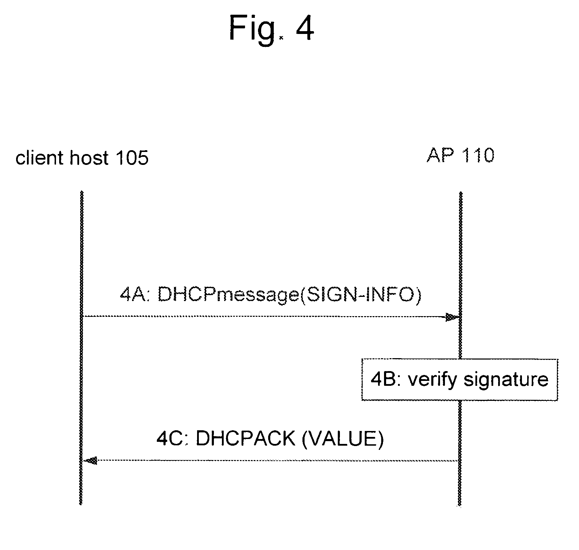

An example of signalling wherein a client host 105 requests parameter values by use of a signed information package 200 is shown in **Fig. 4**. The client host 105 transmits a DHCP message 4A to an AP 110, where the DHCP message 4A comprises a signed information package 200, SIGN-INFO, in a predefined data field (which could advantageously be the client-identifier option, as discussed above). It will in the following be assumed that the AP 110, as well as the client host 105, has the necessary functionality for handling the signed information package 200. Upon receipt of the DHCP message 4A, the AP 110 will realise that the DHCP message 4A comprises a request for at least one parameter value that has previously been assigned to the client host 105 by a first parameter-value assigning node.

When the AP 110 has identified that the DHCP message 4A comprises a request for a previously assigned parameter value, the AP 110 verifies the signature of the first parameter-value assigning node included in the signed information package 200. The verification could be performed according to a known verification/authentication technique, such as for instance OpenSSL signing and verification operations, or any other verification/authentication technique. The AP 110 should preferably have a root certificate installed, which allows the AP 110 to verify the certificate used by the first parameter-value assigning node to sign the signed information package 200. The AP 110 can obtain the certificate of the first parameter-value assigning node in a number of different ways: The certificate could be a part of the signature included in the signed information package 200; the AP 110 could send a request to a central Certificate Authority which issued the certificate; if the IP address of the first parameter-value assigning node is included in the signed information package 200 the AP 110 could request the certificate from the first parameter-value assigning node, or the certificate of the first parameter-value assigning node could have been pre-distributed to the AP 110 (and other APs 110 in the system 100).

If the signature can be verified, and the requested preferred value of the parameter is available for allocation, the AP 110 sends a message 4C, DHCPACK, to the client host 105, including the requested and assigned parameter value(s), VALUE. Message 4c could also include the signed information package 200, SIGN-INFO.

The parameter of which a value is requested by the client host 105 in the signalling diagram could for example be the IP address to be used for communication within system 100, and/or options defined in section 3 of IETF RFC 2132, section 3, e.g. Option 6: Domain Name Server, Option 7: Log Server, Option 12: Host Name, and Option 17: Domain Name. Furthermore, values of the parameters defined in IETS RFC 2131, section 8, could advantageously be requested by use of a signed information package 200: for example Option 40: NIS Domain, Option 41: NIS Servers, Option 43: Vendor Specific Information, Option 64: NIS+ Domain, Option 65: NIS+ Servers, Option 68: MIP HA, Option 69: Mail Server and Option 70: POP Server.

As discussed above, it is generally highly desirable for a client host 105 to maintain the same IP address at least throughout the duration of a communications session. In many situations, it is also be desirable to maintain the same value of other parameters. For example, in a scenario where a client host 105 has a stronger connection to one of a group of APs 110 in a particular area, such as when the client host 105 belongs to a company having an AP 110 which is also a part of a group of APs 110 forming a wireless IP infrastructure (e.g. a WiFi infrastructure), where the other APs 110 belong to other companies. By including in a signed information package 200 information on the Domain Name Server and/or the email server of the company to which the client host 105 belongs, it can be ensured that any outgoing e-mail from the client host 105 will be routed through the correct company e-mail server, even when the client host 105 accesses the IP network 115 via another company's AP 110. Similarly, in the same scenario, the invention would allow for the use "Split DNS", which would provide name resolution for internal corporate names only to the company employees.

Since a client host 105 has to be uniquely identifiable by its IP address, special considerations have to be taken by the AP 110 when the received signed information package 200 comprises a request for a particular IP address. In particular, prior to allocating a particular value of the IP address to a client host 105, a check as to whether that value is available for allocation should preferably be performed.

It is here recognised that under certain circumstances, several APs 110 can use the same IP address space, so that an IP address that has been assigned to a client host 105 by a first AP 110, serving as the first parameter-value assigning node, can be assigned to the client host 105 by a different AP 110 at a later point in time (and by yet further APs 110 at even later points in time). This can for example be the case when the different APs 110 comprise a Network Address Translator (NAT), which in a conventional manner can assign to a client host 105 a private IP address from a private address space, and translate this private address to a public IP address for communication within the IP network 115. The invention recognises that the private address space of different APs 110 can be the same, so that a client host 105 can be assigned the same private IP address by different APs 110 in a sequential manner.

Since an AP 110 can only assign a particular IP address to one client host 105 at a time, the AP 110, upon receipt of a DHCP message 300 comprising a signed information package 200 including a request for a particular (private) IP address, will preferably perform a check in order to ensure that the requested IP address is not already in use by another client host 105. When the (private) IP address has been assigned to a client host 105 by an AP 110, the AP 110 has to register the assignment so that the IP address will not be assigned to another client host 105 subsequently while the IP address is still in use by the requesting client host 105. An assignment of an IP address to a client host 105 is often associated with a lease time, specifying a time period for which the IP address has been assigned to the client host 105. The lease time can typically be extended upon request by the client host 105.

A similar check regarding whether a particular parameter is available for allocation can be performed in relation to other parameters for which the same value can only be assigned to a restricted number of client hosts (examples). However, for many parameter types, all parameter values will always be available for allocation, and such a check is not necessary.

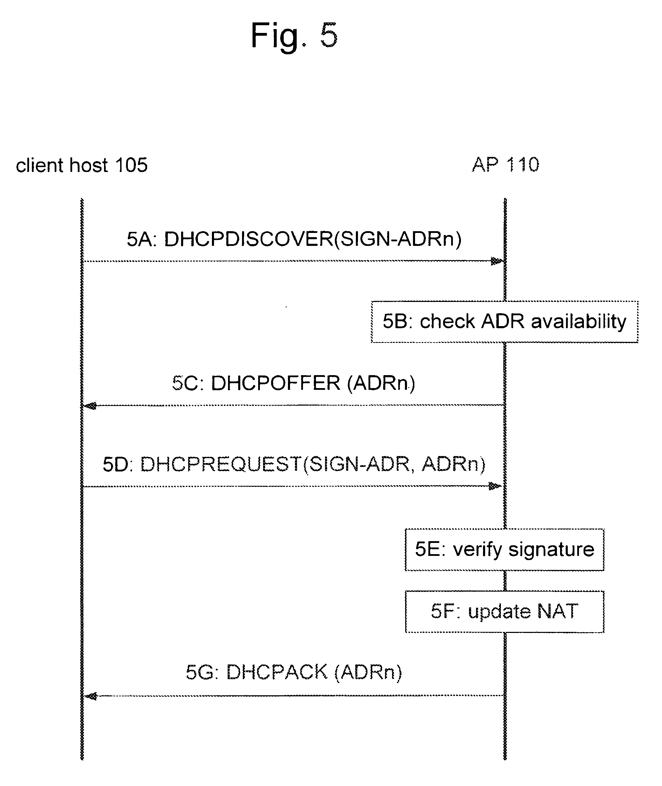

In **Fig. 5**, an instance of the signalling schematically illustrated in Fig. 4 is shown for a situation where the requested parameter value is an IP address, and wherein the access point 110 comprises a NAT. Hence, Fig. 5 is an example of signalling taking place between a client host 105 and an AP 110, wherein the client host 105 requests a particular value "ADRn" of the IP address from the AP 110 by means of a signed information package 200, (indicated SIGN-ADRn). The client host 105 sends a message 5A, DHCPDISCOVER, which includes a signed information package 200, SIGN-ADRn. SIGN-ADRn includes the requested value ADRn of the IP address. At 5B, the AP 110 analyses the signed information package 200 in order to determine the value of the requested IP address, and checks the availability of the requested IP address. If available, the AP 110 sends a message 5C, DCHPOFFER, in a conventional manner, which includes the requested value of the IP address. Upon receipt of this message, the client host 105 sends a message 5D, DHCPREQUEST, including the signed information package 200, SIGN-ADRn. The AP 110 then verifies, at 5E, the signature contained in SIGN-ADRn as described above in relation to Fig. 4, and updates, at 5F, the NAT to include information on the IP address ADRn having been assigned to the client host 105. The AP 110 then sends a message 5G, DHCPACK, including the assigned IP address "ADRn" in the conventional data field for communicating the value of the assigned IP address.

The sequence of events in Fig. 5 could be altered - for example, the verification of the signature performed at 5E could alternatively be performed before the transmission of the message 5C, either before or after the availability check performed at 5B. Furthermore, the signed information package 200, SIGN-ADRn, would not have to be included in message 5D, DHCPREQUST. The SIGN-ADRn could, if desired, be included in the messages sent from the AP 110 to the client host 105, messages 5C and 5G, in order for the client host 105 to recognise that it is the intended recipient of the message 5G. This could however alternatively be solved in other ways - for example, the message 5G could include a hardware address of the client host 105.

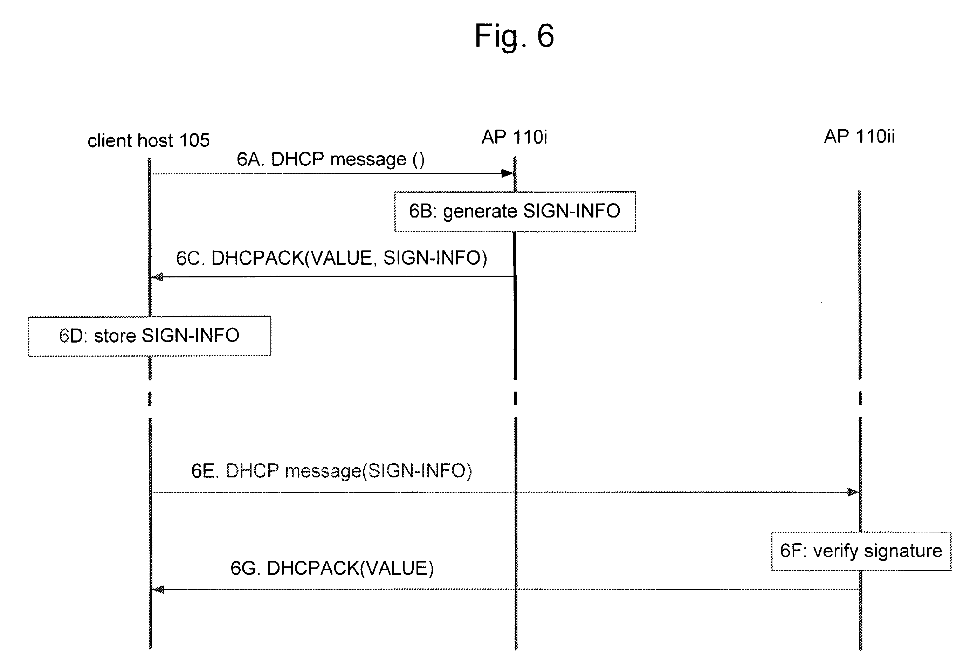

**Fig. 6** is a signalling diagram illustrating a situation wherein a client host 105 sends a conventional DHCP message 6A to a first AP 110i, requesting a value of a parameter. The conventional DHCP message 6A does not include a signed information package 200. In response to the message 6A, the first AP 110i assigns a value of the parameter to the client host 105, and generates a signed information package 200, SIGN-INFO, including the assigned value of the parameter as well as a signature of the first AP 110i. The signed information package 200, SIGN-INFO, is then transmitted to the client host 105 together with the assigned value of the parameter, VALUE, to the client host in a message 6C, DHCPACK. The client host 105 then stores the signed information package 200 for future use. Hence, in the scenario of Fig. 6, the first AP 110i is the first parameter-value assigning node.

At a later point in time (the flow of time having been indicated by the broken time lines in the signalling diagram), the client host 105 attaches to a second AP 110ii, and sends a DHCP message 6E, including the signed information package 200, SIGN-INFO, to the second AP 110ii. The second AP 110ii recognises that the signed information package 200 implies a request for the assignment of the value VALUE of the parameter, and performs, at 6F, a verification of the signature of the first AP 110 included in the signed information package 200. If the signature is true, and the value VALUE of the parameter is available for assignment, the value VALUE is assigned to the client host 105. The assignment is communicated to the client host 105 in a message 6G, DHCPACK. (Events/messages 6E, 6F and 6G correspond to events/messages 4A, 4B and 4C of Fig. 4).

In Fig. 6, the signed information package 200 generated by the first AP 110i is transmitted to the client host 105 in message 6c together with the assigned value of the parameter. However, in a different implementation of the invention, the signed information package 200 and the assigned value of the parameter could be transmitted to the client host 105 in different messages.

In some applications of the invention, it would be desirable if a parameter value included in the signed information package sent by a first parameter-value assigning node to a first client host 105 was not assigned by the first parameter-value assigning node to any other client hosts 105 while the first client host 105 was still able to request the parameter value from other APs 110 by use of the signed information package. This can for example be the case if the signed information package 200 is used in order to allow for a client host 105 to be assigned a particular private IP address by different APs 110 during an ongoing IP communications session, and the first parameter-value assigning node is used for routing of traffic of the IP communications session. In such applications of the invention, the signed information package 200 could advantageously comprise a time stamp indicating a limited period of time during which the parameter value has been leased from the first parameter-value assigning node, for example expressed as an expiry time of the lease. The first parameter-value assigning node could then register, upon generation of the signed information package, that the parameter value should not be assigned to any other client hosts until this lease has expired. Any further APs 110 which assigns the parameter value to the first client host 110 in response to the receipt of the signed information package 200 could then advantageously send a request for an extension of the lease of the parameter value to the first parameter-value assigning node. Such request for extension could for example be triggered by the client host 105, if the client host 105 has a possibility of monitoring the lease time. Alternatively, such request for extension of lease time could be triggered by a monitoring mechanism in the AP 110i.

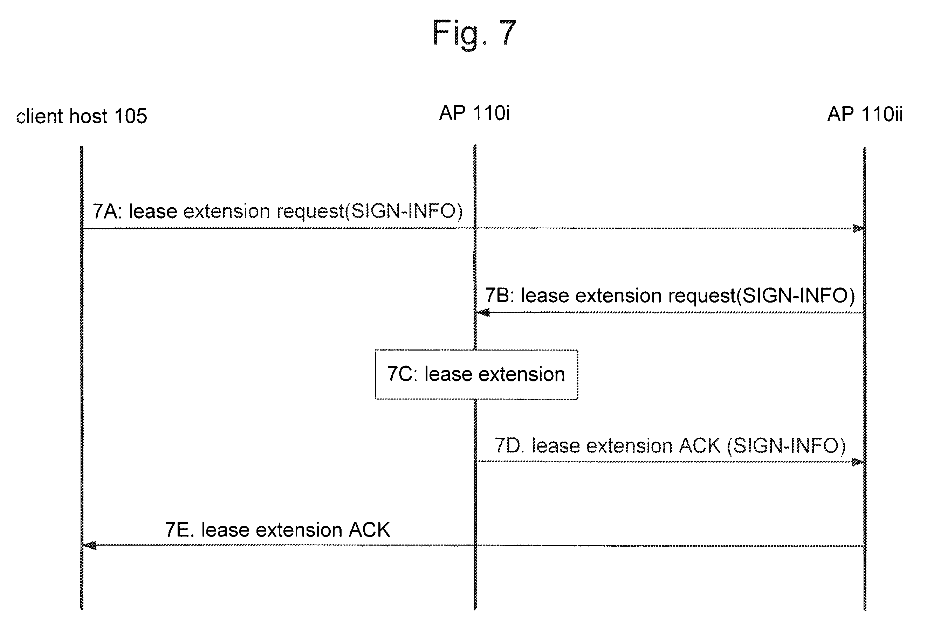

An example of lease extension request signalling is shown in **Fig. 7**, where the first parameter-value assigning node is referred to as AP 110i and the current point of access is AP 110ii (cf. Fig. 6). In the implementation of this aspect of the invention illustrated in Fig. 7, the request for extension of the lease of a parameter value is triggered by the client host 105. A lease extension request message 7A is sent from the client host 105 to the AP 110ii. Upon receipt of message 7A, the AP 110ii sends a lease extension request message 7B to the first parameter-value assigning node AP 110i. Upon receipt of message 7C, the first parameter-value assigning node AP 110i determines, at 7C, whether the lease of the parameter value can be extended, and if so, the extension of the lease will be registered in AP 110i, and a lease extension acknowledgement message 7D is sent to the AP 110ii (in some implementations of the invention, the lease will always be allowed if received before expiry of the lease period, and no check to this end will be necessary). Upon receipt of acknowledgment message 7D, the AP 110ii sends a lease extension acknowledgement message 7E. Messages 7A, 7B, 7D and 7E could be DHCP messages, but could also be transmitted by use of a different protocol.

In the implementation of this aspect of the invention illustrated by Fig. 7, the signed information package 200, SIGN-INFO, is included in the messages 7A, 7B, 7D and 7E, in order for the first parameter-value assigning node AP 110i to identify to which lease the request applies. In other implementations, other information may be included in one or more of the messages as identification, such as for example a hardware address of the client host 105.

In implementations of this aspect of the invention where lease extension request is triggered by the AP 110ii to which the client host 105 is currently connected, messages 7A and 7E of Fig. 7 will be omitted.

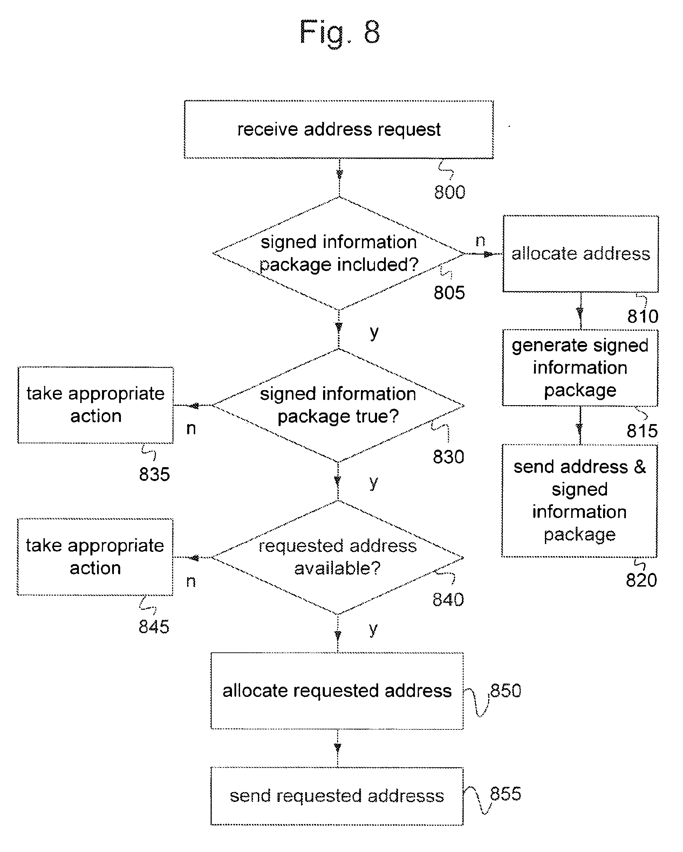

Functionality of an AP 110 relating to an implementation of the invention where the signed information package 200 relates to the assignment of an IP address is schematically illustrated in the flowchart of **Fig. 8**. In step 800, an address request is received by the AP 110 from a client host 105, typically in a DHCPDISCOVER or a DHCPREQUEST message (cf. Fig. 5). In step 805, it is determined whether the address request comprises a signed information package 200. If not, step 810 is entered, wherein an IP address is allocated to the client host 105. Step 815 is then entered, wherein a signed information package 200 is generated. In step 820, the signed information package and the assigned address are communicated to the client host 105. Steps 815 and 820 correspond to messages/events 6B and 6C of Fig. 6.

If it is found in step 805 that the address request comprises a signed information package 200, the signature of the signed information package is verified in step 830. If it is found that the signature is not true, then step 835 is entered and appropriate action is taken, such as informing the client host 105 that the requested IP address cannot be assigned. However, if it is found in step 840 that the signature is true, step 840 is entered, where it is checked whether the requested IP address is available for allocation by the AP 110 (cf. event 5E of Fig. 5). If not, step 845 is entered, where appropriate action is taken, such as for example assigning a different IP address to the client host 105. If, on the other hand, it is found in step 840 that the requested address is available for allocation, step 850 is entered wherein the requested IP address is allocated to the client host 105 (cf. event 5F of Fig. 5). In step 855, the client host 105 is informed accordingly (cf. message 5G of Fig. 5).

In some implementations of the invention steps 805-820 can be omitted. This can for example be the case if the signed information package 200 is transmitted in a message type that is different to the message type used for requesting any IP address. Steps 810-820 could then be performed upon receipt of a request for any IP address. Furthermore, in an implementation of the invention where a signed information package 200 is always included in the messages sent from the client host 105 to the AP 110, (this could for example be possible if the signed information package 200 is statically configured for all the client host 105), steps 805-820 could be omitted.

Although the flowchart of Fig. 8 is illustrated in terms of the assigned parameter value begin an IP address, the functionality of the AP 110 would follow a similar flowchart when the signed information package 200 relates to other parameters. In an aspect of the invention where the signed information package 200 relates to a parameter for which there are no restrictions as to to how many client hosts 105 a particular value can be assigned, steps 830 and 835 may be omitted. In an implementation of the invention where the signed information package 200 can relate to the assignment of values to more than one parameter, a step could be included in the flowchart of Fig. 8 where it is determined to which parameter the received signed information package relates. Such determination step could advantageously be included after step 805, and prior to step 840.

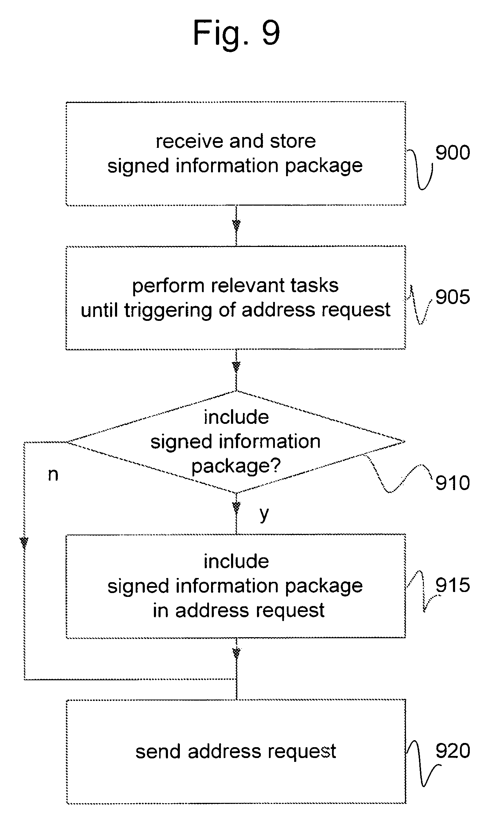

**Fig. 9** is a flowchart schematically illustrating functionality in the client host 105 in an aspect of the invention corresponding to that of Fig. 8, where the signed information package 200 includes a request for a particular IP address. In step 900, the client host 105 receives a signed information package 200, and stores this signed information package 200 for future use. This step corresponds to messages/events 6C and 6D of Fig. 6. In step 905, the client hosts 105 performed relevant tasks, if any, until a triggering event for requesting an IP address occurs. This step corresponds to the broken time lines of Fig. 6.

When a triggering of an address request has occurred, which triggering could for example be that the client host 105 has moved out of reach of an AP 110i via which it was previously accessing the IP network 115 into the reach of another AP 110ii, step 910 is entered. In step 910, it is determined whether the signed information package 200 received in step 900 should be included in the address request. If so, step 915 is entered, wherein the address request including the signed information package 200 is generated. The address request is then sent to the AP 110ii in step 920 (cf. message 6E of Fig. 6). If it is found in step 910 that no signed information package 200 should be included in the address request, an address request which does not include the signed information package 200 is generated and sent, in step 920, to the AP 110ii.

Although Fig. 9 has been discussed in terms of the requested parameter value being an IP address, the method could also be applied to requests for other parameter values.

The invention may be implemented in a manner so that a stored signed information package 200 should always be included in a DHCP message 300 comprising a parameter value request sent from the client host 105. Step 910 may then be omitted. However, in some situations, it may be advantageous to also allow for the transmission of parameter requests that do not include a signed information package 200. In some applications of the invention, there may for example be a desire to keep the same value of a particular parameter in some circumstances, but not in others. For example, if a client host 105 changes its point of access to an IP network 115 by moving from one AP 110i to another AP 110ii during the duration of ongoing communications session, it would be desirable for the client host 105 to keep the same private IP address during the entire session. However, if the same client hosts 105 were to move from an AP 110i to an AP 110ii while not involved in any communications sessions, the assignment of a different IP address may be entirely acceptable. In this application of the invention, a check as to whether any ongoing communications sessions exist could be included in step 910. Step 910 could also include a check of any time stamp of the signed information package 200 in order to see whether the signed information package 200 has expired.

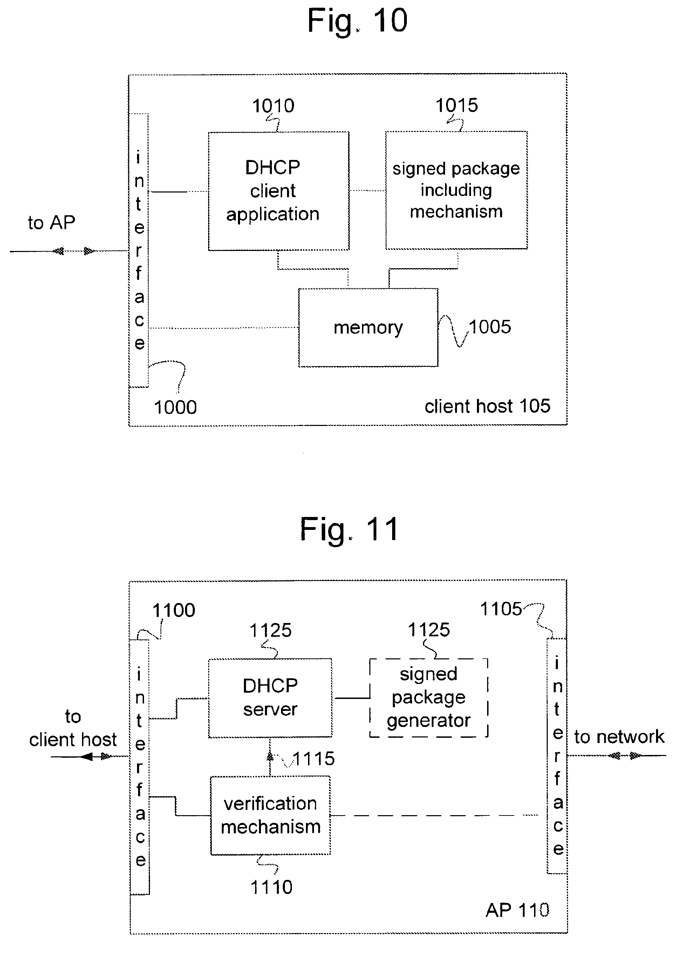

**Fig. 10** is a schematic illustration of a client host 105 according to the invention. Client host 105 of Fig. 10 comprises an interface 1000 for communicating with a first parameter-value assigning node, which may or may not be an access node 110. The interface 1000 is adapted to receive a signed information package 200 and to convey the signed information package 200 to memory 1005, to which interface 1000 is connected (possibly via the DHCP client application 1010). The term memory should here be construed as any type of data storage means suitable for storing information in a client host. In one implementation of the interface 1000, the interface 1000 is adapted to retrieve the signed information package 200 from the vendor-specific option of a received DHCP message 300. Memory 1005 is adapted to store the signed information package 200. Client host 105 further comprises a DHCP client application 1010, adapted to generate DHCP messages 300 for transmission to an access host 110 according to the DHCP protocol. DHCP client application 1010 is connected to memory 1005 and adapted to retrieve the signed information package 200 from memory 1005. Client host 105 further comprises a signed package including mechanism 1015, adapted co-operate with memory 1005 and DHCP client application 1010 in order to include a signed information package 200 retrieved from memory 1005 into a DHCP message 300 generated by DHCP client application. The signed package including mechanism 1015 is shown to be connected to the memory 1005 in order to be able to retrieve a signed information package 200 stored in memory 1005, and further connected to the DHCP client application 1010 in order to convey the signed information package 200 to the DHCP client application 1010. In one advantageous implementation of the client host 105, the signed package including mechanism 1015 and the DHCP client application 1010 are arranged so that the signed information package 200 is included in the client-host identifier option of a DHCP message 300; in another implementation, the signed information package 200 is included in the vendor-specific option. DHCP client application 1010 of Fig. 5 is connected to interface 1000, which is further adapted to transmit the DHCP message 300 generated by the DHCP client application 1010 to an access point 110.

A client host 105 could optionally include a mechanism for requesting a signed information package 200 from a first parameter-value assigning node, for example by indicating, in a DHCP message 300 including a parameter value request, that a signed information package 200 is desired in relation to the requested parameter value. Such indication could for example be included in the vendor class identifier option (option 60) of a DHCP message.

The DHCP client application 1010, the signed package including mechanism 1015 and the memory 1005 are shown as different entities in Fig. 10, wherein the DHCP client application 1010 could for example be a conventional DHCP client application. Alternatively, these mechanisms could be included in the same entity - for example, the signed package including mechanism 1015 and the memory 1005 could be included in a DHCP client application.

Fig. 11 is a schematic illustration of an access point 110 according to the invention. Access point 110 of Fig. 11 comprises a first interface 1100 for communicating with a client host 105, a second interface 1105 for communicating with an IP network 115, a verification mechanism 1110 and a DHCP server 1125. First interface 1100 is adapted to receive a DHCP message 300 comprising a signed information package 200, and to retrieve a signature 205 and a preferred parameter value 210 from the received signed information package 200. In one advantageous implementation of the invention, the interface 1100 is adapted to retrieve the signed information package 200 from the client-identifier option of the DHCP message 300, in another from the vendor specific option. The interface 1100 is adapted to convey the retrieved signature 205 to a verification mechanism 1110, to which the interface 1100 is connected. Verification mechanism 1100 is adapted to verify the signature 205 retrieved from the signed information package 200. Verification mechanism 1110 can be further connected to the second interface 1105, in order to allow for the verification mechanism 1110 to consult further nodes in system 100 in the verification. Verification mechanism 1110 is further adapted to generate a verification signal 1115 indicative of the result of the verification, and to send the verification signal 1115 to the DHCP server 1125. DHCP server 1125 is adapted to allocate, to the client host 105, the preferred value 210 of the parameter if the signal 1115 indicates that the signature 205 of the signed information package 200 is true (possibly also conditioned on the availability of the preferred parameter value for allocation). The interface 1100 is adapted to send the preferred value of the parameter to the DHCP server 1125, possibly via the verification mechanism 1110. The DHCP server 1125 could typically be a conventional DHCP server 125 that is adapted to receive a preferred parameter value and allocate the preferred parameter value, if available for allocation. DHCP server 1125 is connected to interface 1100 in a manner so that the allocated parameter value may be communicated to the client host 105. In Fig. 11, signed package generator 1125 and verification mechanism 1110 are shown to be separate to the DHCP server 1125. Alternatively, these entities could be included as a part of the DHCP server 1125.

In an implementation of the invention where an access point 110 can also function as a first parameter-value assigning node, the access point 110 of Fig. 11 could advantageously also include a signed package generator 1120, adapted to generate a signed information package 200 comprising the signature of the access point 110 and a preferred parameter value. The signed package generator 1120 could advantageously be connected to the DHCP server 1125, from which the signed package generator could receive a signal indicating the preferred parameter value. Signed package generator 1120 of Fig. 11 is further connected to the interface 1100, possibly via the DHCP server 1125, for communication of the signed information package 200 to the client host 105.

Client host 105 and access point 110 comprises data processing means, and the interfaces 1000, 1100 and 1105, the DHCP client application 1010, the signed package including mechanism 1015, the DHCP server 1125, the verification mechanism 1110 and the signed package generator 1120 are advantageously implemented by a suitable combination of hardware and software.

One skilled in the art will appreciate that the present invention is not limited to the embodiments disclosed in the accompanying drawings and the foregoing detailed description, which are presented for purposes of illustration only, but it can be implemented in a number of different ways, and it is defined by the following claims.

## Claims

1. A method for allocating a value of a parameter to a client host (105) by a first access point (110ii) in a communications system comprising an IP network (115), the method being **characterised by**
receiving, in a second access point, a first Dynamic Host Configuration Protocol, DHCP, message from the client host,
wherein the DHCP message comprises a request for a value of the parameter;
assigning a value of the parameter to the client host;
generating the signed information package in response to receipt of the first DHCP message, and wherein a preferred value of the parameter is the value assigned by the second access point;
sending the signed information package to the client host for future use using a second DHCP message (300; 4A; 5A, 5B, 6C; 6E) to carry the signed information package (200) comprising information on the preferred value of the parameter (210) and a signature (205) of the second access point, over at least part of the route from the second access point (110i) to the first access point via the client host.

2. The method of claim 1, comprising
receiving (800), in the first access point (110), the second DHCP message including the signed information package;
verifying (830) the signature of the second access point; and
allocating (850) the preferred parameter value to the client host if the verification of the signature so indicates and the preferred parameter value is available for allocation.

3. The method of claim 2, wherein
the signed information package is retrieved by the first access point from a client-identifier option or a vendor-specific option of the second DHCP message.

4. The method of any one of the above claims, wherein
the parameter for which a value is requested by the client host is an IP address.

5. The method of claim 4, wherein
the access point comprises a network address translator; and the allocating is performed by registering the preferred value of the IP address in the network address translator.

6. The method of claim 5, wherein
the sending of the signed information package from the second access point is performed by use of the Dynamic Host Configuration Protocol, and the signed information package is included in the vendor specific option of the second DHCP message.

7. The method of any one of the above claims, further comprising:
receiving, in the client host from the second access point, the signed information package (200) comprising information on a preferred value of the parameter and a signature of the second access point;
storing the signed information package in the client host; and
sending the second DHCP message comprising the signed information package to the first access point.

8. The method of claim 7, wherein
the signed information package is included in a client-identity option or a vendor-specific option of the second message.

9. A client host (105) capable of communicating with a first access point (110) by means of the DHCP protocol in order to receive a value of a parameter, the client host being **characterised by**:
an interface (1000) arranged to receive, from a second access point (110i), a signed information package (200) including information on a preferred value of the parameter (210) and a signature (205) of the second access point, wherein the preferred value of the parameter is a value assigned by the second access point and the signed information package is generated by the second access point in response to receipt of a first DHCP message;
a memory (1005) arranged to store the signed information package in the client host; and
a DHCP client application client application (1010) adapted to include the signed information package in a third DHCP message, and send said DHCP message to a first access point.

10. The client host of claim 9, wherein
the DHCP client application is adapted to include the signed information package in a client-identifier option or a vendor-specific option of the third DHCP message.

11. The client host of claim 9 or 10, wherein
the interface arranged to receive is adapted to retrieve the signed information package from a vendor specific option of a received second DHCP message.

12. The client host of any one of claims 9-12, wherein
the client host is further adapted to request, from the second access point, the signed information package, for example by including the request in a vendor class identifier option of a first DHCP message.

13. An access point (110) capable of communicating with a client host (105) by means of the DHCP protocol in order to assign a value of a parameter to the client host, the access point comprising a DHCP server (1125), the access point being **characterised by**
an interface (1100) arranged to receive a DHCP message from the client host, the DHCP message comprising a signed information package (200) including information on a preferred value of the parameter (210) and a signature (205) of a second access point (110i), wherein the preferred value of the parameter is a value assigned by the second access point and the signed information package is generated by the second access point in response to receipt of another DHCP message from the client host, and to retrieve, from the received DHCP message, the signature and the preferred value of the parameter;
a verification mechanism (1110) connected to the interface and being arranged to verify said signature and to generate a verification signal in response to said verification; and wherein
the DHCP server is arranged to allocate, to the client host, a parameter value in dependence of the verification signal in a manner so that the value allocated to the client host will be the preferred value if the verification mechanism determines that the signature is true and the preferred value is available for allocation.

14. The access point of claim 13, wherein
the interface is adapted to retrieve the signed information package from a client-identifier option or a vendor-specific option of the DHCP message received from the client host.

15. The access point of claim 13 or 14, further adapted to send, in response to a lease extension trigger, a lease extension request to the second access point in order to request an extension of the lease of the preferred value of the parameter.

16. The access point of any one of claims 13-15, further comprising
a signed package generator (1115) arranged to generate a signed information package comprising a signature of the access point and parameter value; wherein
the access point is arranged to determine whether generation of a signed information package is required and to generate a generation indication signal in response to said determining; and
the signed package generator is arranged to generate the signed information package if the generation indication signal indicates that a signed information package is to be generated.

17. A computer program product for use in a method of allocating a value of a parameter to a client host by a first access point, the computer program product being **characterised by**
computer program code portions operable to, when executed, retrieve a signature and a preferred value of a parameter from a signed information package included in a DHCP message, wherein the preferred value of the parameter is a value assigned by a second access point and the signed information package is generated by the second access point in response to receipt of another DHCP message from the client host;
computer program code portions operable to, when executed, verify the retrieved signature; and
computer program code portions operable to, when executed, allocate the preferred value of the parameter to the client host if the verification of the signature so indicates and the preferred parameter value is available for allocation.

18. A computer program product for use in a method of allocating a value of a parameter to a client host by a first access point, the computer program product being **characterised by**
computer program code portions operable to, when executed, retrieve a signed information package from a DHCP message received by the client host, which includes information on a preferred value of the parameter and a signature of a second access point, wherein the preferred value of the parameter is a value assigned by the second access point and the signed information package is generated by the second access point in response to receipt of another DHCP message from the client host;
computer program code portions operable to, when executed, store the signed information package in a memory of the client host; and
computer program code portions operable to, when executed, include the signed information package in a further DHCP message to be sent to the first access point.

## Patentansprüche

1. Verfahren zum Zuweisen eines Werts eines Parameters an einen Client-Host (105) durch einen ersten Zugangspunkt (110ii) in einem ein IP-Netz (115) umfassenden Komnunikationssystem, wobei das Verfahren **gekennzeichnet ist durch**:
Empfangen einer ersten DHCP(Dynamic Host Configuration Protocol, Dynamisches Host-Konfigurationsprotokoll)-Nachricht vom Client-Host in einem zweiten Zugangspunkt, worin die DHCP-Nachricht eine Anforderung für einen Wert des Parameters umfasst;
Zuweisen eines Werts des Parameters an den Client-Host;
Erzeugen des signierten Informationspakets als Antwort auf den Empfang der ersten DHCP-Nachricht, und worin ein bevorzugter Wert des Parameters der Wert ist, der durch den zweiten Zugangspunkt zugewiesen wird;
Senden des signierten Informationspakets an den Client-Host zwecks zukünftiger Verwendung unter Verwendung einer zweiten DHCP-Nachricht (300; 4A; 5A. 5B, 6C; 6E), um das signierte Informationspaket (200), das Information über den bevorzugten Wert des Parameters (210) und eine Signatur (205) des zweiten Zugangspunkts umfasst, **durch** mindestens einen Teil der Route vom zweiten Zugangspunkt (110i) zum ersten Zugangspunkt über den Client-Host zu tragen.

2. Verfahren nach Anspruch 1, Folgendes umfassend:
Empfangen (800) der zweiten DHCP-Nachricht einschließlich des signierten Informationspakets im ersten Zugangspunkt (110);
Verifizieren (830) der Signatur des zweiten Zugangspunkts; und
Zuweisen (850) des bevorzugten Parameterwerts an den Client-Host, falls die Verifikation der Signatur dies anzeigt und der bevorzugte Parameterwert zur Zuweisung verfügbar ist.

3. Verfahren nach Anspruch 2, worin
das signierte Informationspaket durch den ersten Zugangspunkt von einer Client-Identifikator-Option oder einer anbieterspezifischen Option der zweiten DHCP-Nachricht abgerufen wird.

4. Verfahren nach einem der obigen Ansprüche, worin
der Parameter, für den ein Wert durch den Client-Host angefordert wird, eine IP-Adresse ist.

5. Verfahren nach Anspruch 4, worin
der Zugangspunkt einen Nelzadressübersetzer umfasst; und das Zuweisen durch Registrieren des bevorzugten Werts der IP-Adresse im Netzadressübersetzer ausgeführt wird.

6. Verfahren nach Anspruch 5, worin
das Senden des signierten Informationspakets vom zweiten Zugangspunkt durch Verwenden des Dynamischen Host-Konfigurationsprotokolls ausgeführt wird und das signierte Informationspaket in der anbieterspezifischen Option der zweiten DHCP-Nachricht enthalten ist.

7. Verfahren nach einem der obigen Ansprüche, außerdem umfassend:
im Client-Host vom zweiten Zugangspunkt das signierte Informationspaket (200) empfangen, das Information über einen bevorzugten Wert des Parameters und eine Signatur des zweiten Zugangspunkts umfasst;
Speichern des signierten Informationspakets im Client-Host; und
Senden der zweiten DHCP-Nachricht, die das signierte Informationspaket umfasst, an den ersten Zugangspunkt.

8. Verfahren nach Anspruch 7, worin
das signierte Informationspaket in einer Clientidentitätsoption oder einer anbieterspezifischen Option der zweiten DHCP-Nachricht enthalten ist.

9. Client-Host (105), befähigt zum Kommunizieren mit einem ersten Zugangspunkt (110) mit Hilfe des DHCP-Protokolls, um einen Wert eines Parameters zu empfangen, wobei der Client-Host **gekennzeichnet ist durch**:
eine Schnittstelle (1000), dazu angeordnet, um von einem zweiten Zugangspunkt (110i) ein signiertes Informationspaket (200) zu empfangen, das Information über einen bevorzugten Wert des Parameters (210) und eine Signatur (205) des zweiten Zugangspunkts enthält, worin der bevorzugte Wert des Parameters ein Wert ist, der **durch** den zweiten Zugangspunkt zugewiesen wird, und das signierte Informationspaket **durch** den zweiten Zugangspunkt als Antwort auf den Empfang einer ersten DHCP-Nachricht erzeugt wird;
einen Speicher (1005), der zum Speichern des signierten Informationspakets im Client-Host angeordnet ist; und
eine DHCP-Clientanwendung (1010), die dazu angepasst ist, das signierte Informationspaket in eine dritte DHCP-Nachricht einzuschließen und die DHCP-Nachricht an einen ersten Zugangspunkt zur senden.

10. Client-Host nach Anspruch 9, worin
die DHCP-Clientanwendung dazu angepasst ist, das signierte Informationspaket in eine Client-Identifikatoroption oder eine anbieterspezifische Option der dritten DHCP-Nachricht einzuschließen.

11. Client-Host nach Anspruch 9 oder 10, worin
die zum Empfangen angeordnete Schnittstelle dazu angepasst ist, das signierte Informationspaket von einer anbieterspezifischen Option einer empfangenen zweiten DHCP-Nachricht abzurufen.

12. Client-Host nach einem der Ansprüche 9-11, worin
der Client-Host außerdem dazu angepasst ist, vom zweiten Zugangspunkt das signierte Informationspaket anzufordern, beispielsweise durch Einschließen der Anforderung in eine Anbieterklassen-Identifikatoroption einer ersten DHCP-Nachricht.

13. Zugangspunkt (110), dazu befähigt, mit einem Client-Host (105) mit Hilfe des DHCP-Protokolls zu kommunizieren, um einen Wert eines Parameters dem Client-Host zuzuweisen, wobei der Zugangspunkt einen DHCP-Server (1125) umfasst, wobei der Zugangspunkt **dadurch gekennzeichnet ist, dass**
eine Schnittstelle (1100) dazu angeordnet ist, eine DHCP-Nachricht vom Client-Host zu empfangen, wobei die DHCP-Nachricht ein signiertes Informationspaket (200) umfasst, das Information über einen bevorzugten Wert des Parameters (210) und eine Signatur (205) eines zweiten Zugangspunkts (110i) enthält, worin der bevorzugte Wert des Parameters ein durch den zweiten Zugangspunkt zugewiesener Wert ist und das signierte Informationspaket durch den zweiten Zugangspunkt als Antwort auf den Empfang einer anderen DHCP-Nachricht vom Client-Host erzeugt wird, und von der empfangenen DHCP-Nachricht die Signatur und den bevorzugten Wert des Parameters abzurufen;
ein Verifikationsmechanismus (1110) an die Schnittstelle angeschlossen ist und dazu angeordnet wird, die Signatur zu verifizieren und ein Verifikationssignal als Antwort auf die Verifikation zu erzeugen; und worin
der DHCP-Server dazu angeordnet ist, dem Client-Ilost einen Parameterwert in Abhängigkeit vom Verifikationssignal auf eine Weise zuzuweisen, dass der dem Client-Host zugewiesene Wert der bevorzugte Wert sein wird, falls der Verifikationsmechanismus bestimmt, dass die Signatur gültig ist und der bevorzugte Wert zur Zuweisung verfügbar ist.

14. Zugangspunkt nach Anspruch 13, worin
die Schnittstelle dazu angepasst ist, das signierte Informationspaket von einer Client-Identifikatoroption oder einer anbieterspezifischen Option der DHCP-Nachricht abzurufen, die vom Client-Host empfangen wird.

15. Zugangspunkt nach Anspruch 13 oder 14, außerdem dazu angepasst, als Antwort auf einen Lease-Verlängerungstrigger eine Lease-Verlängerungsanforderung an den zweiten Zugangspunkt zu senden, um eine Verlängerung des Lease des bevorzugten Werts des Parameters anzufordern.

16. Zugangspunkt nach einem der Ansprüche 13-15, außerdem umfassend:
einen Generator für signierte Pakete (1115), dazu angeordnet, ein signiertes Informationspaket zu generieren, das eine Signatur des Zugangspunkts und einen Parameterwert umfasst; worin
der Zugangspunkt zum Bestimmen angeordnet ist, ob die Generation eines signierten Informationspakets benötigt wird, und als Antwort auf die Bestimmung ein Generationsanzeigesignal generiert; und
der Generator für signierte Pakete dazu angeordnet ist, das signierte Informationspaket zu generieren, falls das Generationsanzeigesignal anzeigt, dass ein signiertes Informationspaket zu generieren ist.

17. Computerprogrammprodukt zur Verwendung in einem Verfahren zum Zuweisen eines Werts eines Parameters an einen Client-Host durch einen ersten Zugangspunkt, wobei das Computerprogrammprodukt **gekennzeichnet ist durch**:
Computerprogramm-Codeteile, die betriebsbereit sind, bei Ausführung eine Signatur und einen bevorzugten Wert eines Parameters von einem signierten Informationspaket abzurufen, die in einer DHCP-Nachricht enthalten sind, worin der bevorzugte Wert des Parameters ein Wert ist, der **durch** einen zweiten Zugangspunkt zugewiesen wird, und das signierte Informationspaket **durch** den zweiten Zugangspunkt als Antwort auf den Empfang einer anderen DHCP-Nachricht vom Client-Host erzeugt wird;
Computerprogramm-Codeteile, die betriebsbereit sind, bei Ausführung die abgerufene Signatur zu verifizieren; und
Computerprogramm-Codeteile, die betriebsbereit sind, bei Ausführung den bevorzugten Wert des Parameters dem Client-Host zuzuweisen, falls die Verifikation der Signatur dies anzeigt und der bevorzugte Parameterwert zur Zuweisung verfügbar ist.

18. Computerprogrammprodukt zur Verwendung in einem Verfahren zum Zuweisen eines Werts eines Parameters an einen Client-Host durch einen ersten Zugangspunkt, wobei das Computerprogrammprodukt **gekennzeichnet ist durch**:
Computerprogramm-Codeteile, die betriebsbereit sind, bei Ausführung ein signiertes Informationspaket aus einer **durch** den Client-Host empfangenen DHCP-Nachricht abzurufen, das Information über einen bevorzugten Wert des Parameters und eine Signatur eines zweiten Zugangspunkts enthält, worin der bevorzugte Wert des Parameters ein Wert ist, der **durch** den zweiten Zugangspunkt zugewiesen wird, und das signierte Informationspaket **durch** den zweiten Zugangspunkt als Antwort auf den Empfang einer anderen DHCP-Nachricht vom Client-Host erzeugt wird;
Computerprogramm-Codeteile, die betriebsbereit sind, bei Ausführung das signierte Informationspaket in einen Speicher des Client-Host abzuspeichern; und
Computerprogramm-Codeteile, die betriebsbereit sind, bei Ausführung das signierte Informationspaket in eine weitere DHCP-Nachricht einzuschließen, die an den ersten Zugangspunkt zu senden ist.

## Revendications

1. Procédé d'attribution d'une valeur d'un paramètre à un hôte de client (105) par un premier point d'accès (110ii) dans un système de communication comprenant un réseau IP (115), le procédé étant **caractérisé par** les étapes consistant à :
recevoir, dans un deuxième point d'accès, un premier message de protocole de configuration d'hôte dynamique, DHCP, de l'hôte de client, dans lequel le message DHCP comprend une demande pour une valeur du paramètre ;
attribuer une valeur du paramètre à l'hôte de client ;
générer le paquetage d'informations signées en réponse à la réception du premier message DHCP, et dans lequel une valeur préférée du paramètre est la valeur attribuée par le deuxième point d'accès ;
envoyer le paquetage d'informations signées à l'hôte de client pour une utilisation future en utilisant un deuxième message DHCP (300 ; 4A ; 5A, 5B, 6C ; 6E) pour transporter le paquetage d'informations signées (200) comprenant des informations concernant la valeur préférée du paramètre (210) et une signature (205) du deuxième point d'accès, sur au moins une partie du trajet du deuxième point d'accès (110i) au premier point d'accès par l'intermédiaire de l'hôte de client.

2. Procédé selon la revendication 1, consistant à :
recevoir (800), dans le premier point d'accès (110), le deuxième message DHCP comprenant le paquetage d'informations signées ;
vérifier (830) la signature du deuxième point d'accès ; et
attribuer (850) la valeur de paramètre préférée à l'hôte de client si la vérification de la signature l'indique et si la valeur de paramètre préférée est disponible pour attribution.

3. Procédé selon la revendication 2, dans lequel
le paquetage d'informations signées est récupéré par le premier point d'accès à partir d'une option d'identifiant de client ou d'une option spécifique au vendeur du deuxième message DHCP.

4. Procédé selon l'une quelconque des revendications ci-dessus, dans lequel le paramètre pour lequel une valeur est demandée par l'hôte de client est une adresse IP.

5. Procédé selon la revendication 4, dans lequel
le point d'accès comprend un transformateur d'adresse de réseau ; et l'attribution est effectuée en enregistrant la valeur préférée de l'adresse IP dans le transformateur d'adresse de réseau.

6. Procédé selon la revendication 5, dans lequel
l'envoi du paquetage d'informations signées à partir du deuxième point d'accès est effectué en utilisant le protocole de configuration d'hôte dynamique, et le paquetage d'informations signées est inclus dans l'option spécifique au vendeur du deuxième message DHCP.

7. Procédé selon l'une quelconque des revendications précédentes, consistant en outre à :
recevoir, dans l'hôte de client du deuxième point d'accès, le paquetage d'informations signées (200) comprenant des informations concernant une valeur préférée du paramètre et une signature du deuxième point d'accès ;
mémoriser le paquetage d'informations signées dans l'hôte de client; et
envoyer le deuxième message DHCP comprenant le paquetage d'informations signées au premier point d'accès.

8. Procédé selon la revendication 7, dans lequel
le paquetage d'informations signées est inclus dans une option d'identité de client ou une option spécifique au vendeur du deuxième message DHCP.

9. Hôte de client (105) capable de communiquer avec un premier point d'accès (110) au moyen du protocole DHCP afin de recevoir une valeur d'un paramètre, l'hôte de client étant **caractérisé par** :
une interface (1000) agencée pour recevoir, d'un deuxième point d'accès (110i), un paquetage d'informations signées (200) comprenant des informations concernant une valeur préférée du paramètre (210) et une signature (205) du deuxième point d'accès, dans lequel la valeur préférée du paramètre est une valeur attribuée par le deuxième point d'accès et le paquetage d'informations signées est généré par le deuxième point d'accès en réponse à la réception d'un premier message DHCP ;
une mémoire (1005) agencée pour mémoriser le paquetage d'informations signées dans l'hôte de client ; et
une application de client DHCP (1010) conçue pour inclure le paquetage d'informations signées dans un troisième message DHCP, et envoyer ledit message DHCP à un premier point d'accès.

10. Hôte de client selon la revendication 9, dans lequel
l'application de client DHCP est conçue pour inclure le paquetage d'informations signées dans une option d'identifiant de client ou une option spécifique au vendeur du troisième message DHCP.

11. Hôte de client selon la revendication 9 ou 10, dans lequel
l'interface agencée pour recevoir est conçue pour récupérer le paquetage d'informations signées a partir d'une option spécifique au vendeur d'un deuxième message DHCP reçu.

12. Hôte de client selon l'une quelconque des revendications 9) à 11, dans lequel
l'hôte de client est en outre conçu pour demander, au deuxième point d'accès, le paquetage d'informations signées, par exemple en incluant la demande dans une option d'identifiant de catégorie de vendeur d'un premier message DHCP.

13. Point d'accès (110) capable de communiquer avec un hôte de client (105) au moyen du protocole DHCP afin d'attribuer une valeur d'un paramètre à l'hôte de client, le point d'accès comprenant un serveur DHCP (1125), le point d'accès étant **caractérisé par**
une interface (1100) agencée pour recevoir un message DHCP de l'hôte de client, le message DHCP comprenant un paquetage d'informations signées (200) comprenant des informations concernant une valeur préférée du paramètre (210) et une signature (205) d'un deuxième point d'accès (110i), dans lequel la valeur préférée du paramètre est une valeur attribuée par le deuxième point d'accès et le paquetage d'informations signées est généré par le deuxième point d'accès en réponse à la réception d'un autre message DHCP de l'hôte de client, et pour récupérer, à partir du message DHCP reçu, la signature et la valeur préférée du paramètre ;
un mécanisme de vérification (1110) connecté à l'interface et agencé pour vérifier ladite signature et pour générer un signal de vérification en réponse à ladite vérification ; et dans lequel
le serveur DHCP est agencé pour attribuer, à l'hôte de client, une valeur de paramètre en fonction du signal de vérification de manière à ce que la valeur attribuée à l'hôte de client soit la valeur préférée si le mécanisme de vérification détermine que la signature est vraie et si la valeur préférée est disponible pour attribution.

14. Point d'accès selon la revendication 13, dans lequel
l'interface est conçue pour récupérer le paquetage d'informations signées à partir d'une option d'identifiant de client ou d'une option spécifique au vendeur du message DHCP reçu de l'hôte de client.

15. Point d'accès selon la revendication 13 ou 14, conçu en outre pour envoyer, en réponse à un déclenchement d'extension de bail, une demande d'extension de bail au deuxième point d'accès afin de demander une extension du bail de la valeur préférée du paramètre.

16. Point d'accès selon l'une quelconque des revendications 13 à 15, comprenant en outre :
un générateur de paquetage signé (1115) agencé pour générer un paquetage d'informations signées comprenant une signature du point d'accès et une valeur de paramètre ; dans lequel
le point d'accès est agencé pour déterminer si la génération d'un paquetage d'informations signées est nécessaire et pour générer un signal d'indication de génération en réponse à ladite détermination ; et
le générateur de paquetage signé est agencé pour générer le paquetage d'informations signées si le signal d'indication de génération indique qu'un paquetage d'informations signées doit être généré.

17. Produit-programme d'ordinateur pour une utilisation dans un procédé d'attribution d'une valeur d'un paramètre à un hôte de client par un premier point d'accès, le produit-programme d'ordinateur étant **caractérisé par**
des parties de code de programme pouvant être utilisées pour, lors de leur exécution, récupérer une signature et une valeur préférée d'un paramètre à partir d'un paquetage d'informations signées inclus dans un message DHCP, dans lequel la valeur préférée du paramètre est une valeur attribuée par un deuxième point d'accès et le paquetage d'informations signées est généré par le deuxième point d'accès en réponse à la réception d'un autre message DHCP de l'hôte de client;
des parties de code de programme d'ordinateur pouvant être utilisées pour, lors de leur exécution, vérifier la signature récupérée ; et
des parties de code de programme d'ordinateur pouvant être utilisées pour, lors de leur exécution, attribuer la valeur préférée du paramètre à l'hôte de client si la vérification de la signature l'indique et si la valeur de paramètre préférée est disponible pour attribution.

18. Produit-programme d'ordinateur pour une utilisation dans un procédé d'attribution d'une valeur d'un paramètre à un hôte de client par un premier point d'accès, le produit-programme d'ordinateur étant **caractérisé par**
des parties de code de programme d'ordinateur pouvant être utilisées pour, lors de leur exécution, récupérer un paquetage d'informations signées à partir d'un message DHCP reçu par l'hôte de client, qui comprend des informations concernant une valeur préférée du paramètre et une signature d'un deuxième point d'accès, dans lequel la valeur préférée du paramètre est une valeur attribuée par le deuxième point d'accès et le paquetage d'informations signées est généré par le deuxième point d'accès en réponse à la réception d'un autre message DHCP de l'hôte de client ;
des parties de code de programme d'ordinateur pouvant être utilisées pour, lors de leur exécution, mémoriser le paquetage d'informations signées dans une mémoire de l'hôte de client ; et
des parties de code de programme d'ordinateur pouvant être utilisées pour, lors de leur exécution, inclure le paquetage d'informations signées dans un autre message DHCP à envoyer au premier point d'accès.
